# EUROPÄISCHE PATENTSCHRIFT

(11) **EP 0 455 654 B1**
(45) Veröffentlichungstag und Bekanntmachung des Hinweises auf die Patenterteilung: **28.07.1993**
(21) Anmeldenummer: 90901758.4
(22) Anmeldetag: 22.01.1990
(51) Int. Cl.: G03B 9/12

(54) **VERSTELLBARE UMLAUFBLENDE**
ADJUSTABLE ROTARY SHUTTER
OBTURATEUR ROTATIF AJUSTABLE

(30) Priorität: 30.01.1989 DE 3902688
(43) Veröffentlichungstag der Anmeldung: 13.11.1991
(73) Patentinhaber: ARNOLD & RICHTER CINE TECHNIK GMBH & CO. BETRIEBS KG., D-80799 München (DE)
(72) Erfinder: SATTLER, Fritz, D-8000 München 19 (DE); NGUYEN-NHU, Anh, D-8044 Unterschleissheim (DE)
(74) Vertreter: Maikowski, Michael, Dipl.-Ing. Dr.
(86) Internationale Anmeldenummer: DE9000044
(87) Internationale Veröffentlichungsnummer: WO9008975

(56) Entgegenhaltungen:
- DE-A- 2 947 333
- US-A- 4 322 140
- PATENT ABSTRACTS OF JAPAN, Band 9, Nr. 210 (P-383)(1933), 28. August 1985;& JP-A-6070427

## Beschreibung

Die Erfindung betrifft eine verstellbare Umlaufblende gemäß dem Oberbegriff des Anspruchs 1 sowie eine Regeleinrichtung zum Betrieb einer verstellbaren Umlaufblende.

Aus der DE-A-29 47 333 ist eine verstellbare Umlaufblende für eine Filmkamera der im Oberbegriff des Anspruchs 1 genannten Art bekannt, die einen koaxial auf der Drehachse der Umlaufblende angeordneten Blendenverstellsektor aufweist. Der Blendenverstellsektor ist über eine in der Drehachse der Umlaufblende drehbar gelagerte Verstellachse verstellbar. Ein Ende der Verstellachse ist mit einem auf der Drehachse der Umlaufblende aufgesetzten Stellmotor verbunden, während das andere Ende ein Ritzel aufweist, das über ein Getriebe mit dem Blendenverstellsektor verbunden ist.

Die bekannte verstellbare Umlaufblende ermöglicht eine stufenlose Verstellung des Blendenwinkels im Lauf der Umlaufblende durch Speisung des Verstellmotors mit einer Spannung, deren Polarität die Richtung der Verstellung vorgibt. Durch die während des Laufs verstellbare Umlaufblende wird sichergestellt, daß der Blendenwinkel der synchron und phasenrichtig mit dem Kamerawerk umlaufenden und den Bildbereich während der Filmtransportphase abdeckenden Blende nicht kleiner ist, als der Schaltwinkel des zugehörigen Filmschaltwerks dies zuläßt. Dabei erfolgt die Belichtung des Filmbildes während der Filmstillstandsphase im Bereich des verbleibenden Blendenhellsektors, so daß eine Verkleinerung dieses Hellsektors die zur Verfügung stehende Belichtungszeit verringert, während eine Vergrößerung des Hellsektors für eine längere Belichtungszeit sorgt. Bei einer stufenlos verstellbaren Umlaufblende kann daher die Belichtungszeit nach einem vorgegebenen Belichtungsprogramm oder anderen Parametern den jeweiligen Lichtverhältnissen beziehungsweise den gewünschten Effekten angepaßt werden.

Der jeweilige Blendenverstellsektor wird bei der bekannten verstellbaren Umlaufblende über eine elektro-optische Abtasteinrichtung und eine elektronische Steuerung erfaßt und besteht aus einer in der Bewegungsbahn der verstellbaren Umlaufblende angeordneten Lichtquelle und einem Lichtempfänger, die zusammen eine Lichtschranke zur Ermittlung der realen Öffnungszeiten der verstellbaren Umlaufblende bilden. Mittels einer digitalen Schaltung werden die von der Lichtschranke abgegebenen Lichtimpulse gezählt und daraus die Stellung des Blendenverstellsektors beziehungsweise die Größe des Blendenwinkels bestimmt. Aus diesem Grunde ist eine Erfassung des Blendenverstellsektors nur im Lauf der verstellbaren Umlaufblende möglich. Zum Einhalten des eingestellten Blendenverstellsektors ist es darüber hinaus erforderlich, den Verstellmotor ständig nachzuregeln, um den gewünschten und eingestellten Blendenverstellsektor einzuhalten.

Aus der US-A-4322140 ist eine verstellbare Umlaufblende für Filmkameras bekannt, die aus mehreren gegeneinander verschiebbaren Blendenflügeln besteht, die auf einer Blendenwelle angeordnet sind, die über ein Getriebe mit einem Filmtransportmotor verbunden ist. Eine auf die Blendenwelle gesteckte Blenden-Hohlwelle ist über einen Einstellzylinder mit einem Verstellmotor verbunden, der die Blendenflügel gegeneinander verdreht, indem die Blenden-Hohlwelle einen in eine Bohrung des einen äußeren Blendenflügels eingreifenden Stift aufweist, während der andere äußere Blendenflügel eine Bohrung aufweist, in die ein Stift des mit dem Filmtransportmotor verbundenen Getriebes eingreift. Die Blendenflügel weisen radiale Nuten auf, die sich über einen vorgegebenen Winkel erstrecken, so daß die einzelnen Blendenflügel über einen vorgebbaren Gesamtwinkel gegeneinander verstellbar sind.

Die Stellung des Einstellzylinders und damit der Blendenflügel gegeneinander wird über mehrere Schalter erfaßt, die an der Peripherie des Einstellzylinders angeordnet sind und in Eingriff mit auf dem Einstellzylinder angeordnete Nocken geraten. Damit kann insgesamt der Blendenverstellwinkel im Lauf der Filmkamera erfaßt werden, im Stillstand ist die Erfassung jedoch nur in einem größeren Toleranzbereich möglich.

Aufgabe der vorliegenden Erfindung ist es, eine verstellbare Umlaufblende der eingangs genannten Art zu schaffen, bei der der Blendenverstellsektor sowohl im Lauf als auch im Ruhezustand einstellbar ist und auf eine Anzeigeeinrichtung anzeigbar ist und die eine manuelle Einstellung des Blendenverstellsektors bei gleichzeitiger Erfassung und Anzeige des eingestellten Wertes im Stillstand der verstellbaren Umlaufblende zuläßt.

Diese Aufgabe wird durch das kennzeichnende Merkmal des Anspruchs 1 gelöst.

Die erfindungsgemäße Lösung gestattet es, sowohl während des Laufs als auch im Stillstand der verstellbaren Umlaufblende den jeweiligen Verstellwinkel des Blendenverstellsektors festzustellen. Darüber hinaus besteht die Möglichkeit, den gewünschten Blendenverstellsektor im Stillstand der verstellbaren Umlaufblende manuell einzustellen und den jeweils eingestellten Wert abzulesen bzw. mittels einer elektronischen Steuereinrichtung zu erfassen. Durch die Möglichkeit der Erfassung der Position des Blendenverstellsektors gegenüber dem Blendensektor sowohl im Lauf als auch im Stillstand wird die Voraussetzung dafür geschaffen, daß ein einmal eingestellter Wert erfaßt und bei einer manuellen Verstellung bspw. beim Putzen der verstellbaren Umlaufblende durch eine zugeordnete Steuereinrichtung wieder eingestellt werden kann.

Eine vorteilhafte Weiterbildung der erfindungsgemäßen Lösung ist dadurch gekennzeichnet, daß eine Handverstelleinrichtung zur stromlosen Verstellung des Blendenverstellsektors vorgesehen ist, die eine mit dem Blendensektor verbundene Umlaufscheibe mit mehreren am Umfang vorgesehenen Kerben und einen mit dem Blendenverstellsektor verbundenen Rasthebel zur formschlüssigen Verbindung des Blendenverstellsektors mit dem Blendensektor aufweist.

Diese Weiterbildung der erfindungsgemäßen Lösung ermöglicht eine Handverstellung zur stromlosen Verstellung des Blendenverstellsektors, wobei der eingestellte Winkel des Blendenverstellsektors mechanisch arretierbar ist, so daß auch bei Stromausfall oder einem Ausfall des Verstellmotors eine Einstellung eines gewünschten Blendenverstellsektors möglich ist.

Eine vorteilhafte Ausgestaltung der erfindungsgemäßen Lösung ist dadurch gekennzeichnet, daß zwischen dem Blendensektor und dem Blendenverstellsektor eine Lager- und Friktionseinrichtung vorgesehen ist, die aus mehreren radial zueinander beabstandeten Kugeln sowie mehreren in radialer Richtung zwischen den Kugeln angeordneten Kunststoffsegmenten mit mehreren auf dem Blendenverstellsektor befestigten Magneten besteht.

Diese Ausgestaltung der erfindungsgemäßen Lösung stellt sicher, daß der Blendenverstellsektor im normalen Betrieb nicht verstellt wird, ohne daß ein ständiges Nachregeln über den Verstellmotor notwendig ist. Die erfindungsgemäße Lagerung des Verstellflügels mit zusätzlicher Friktion bewirkt, daß die jeweils eingestellte Stellung des Blendenverstellsektors auch bei rotierender Umlaufblende eingehalten wird und nur ein geringfügiges Nachregeln bspw. bei einem Wechsel der Filmgeschwindigkeit oder zum bewußten Verstellen des Blendenverstellsektors erforderlich ist.

Eine Regeleinrichtung zum Betrieb der verstellbaren Umlaufblende mit einer im Drehbereich der Blendensektoren angeordneten Sensoreinrichtung zum Messen, einem Sollwertgeber zum Einstellen und einer Anzeigeeinrichtung zum Anzeigen des Blendenöffnungswinkels ist dadurch gekennzeichnet, daß ein Mikroprozessor vorgesehen ist, der eingangsseitig mit der Sensoreinrichtung, dem Sollwertgeber und über einen ersten Verstärker mit dem dem Blendenöffnungswinkel entsprechenden Signal des Potentiometers, und ausgangsseitig über einen zweiten Verstärker mit dem Verstellmotor verbunden ist, und daß der Mikroprozessor geeignet ist, den jeweiligen Blendenöffnungswinkel entsprechend dem Potentiometersignal anzuzeigen und mit einem Sollwert zu vergleichen, um den Verstellmotor zu steuern.

Bei dieser Regeleinrichtung zum Betrieb der verstellbaren Umlaufblende erfaßt die Sensoreinrichtung im Lauf der verstellbaren Umlaufblende den jeweiligen Blendenöffnungswinkel, d. h. die Öffnungszeit der Umlaufblende, der mit dem eingegebenen Sollwert verglichen wird, so daß mittels des Mikroprozessors eine Korrektur erfolgen kann. Dadurch ist die Genauigkeit der Blendenverstellung unabhängig von Systemtoleranzen sichergestellt.

Vorteilhafte Ausgestaltungen und Weiterbildungen der Erfindung sind in den verbleibenden Unteransprüchen gekennzeichnet.

Die Erfindung wird nachstehend an Hand der in der Zeichnung dargestellten Ausführungsbeispiele näher erläutert. Es zeigen:
- Figur 1: eine schematisch-perspektivische Darstellung einer verstellbaren Umlaufblende mit zugehöriger Steuerung;
- Figur 2: einen Schnitt durch die verstellbare Umlaufblende;
- Figur 3: einen Schnitt durch das Planetengetriebe zum Verstellen des Blendenverstellsektors und
- Figur 4: einen Schnitt durch die Lager- und Friktionseinrichtung zwischen dem Blendenverstellsektor und dem Blendensektor.

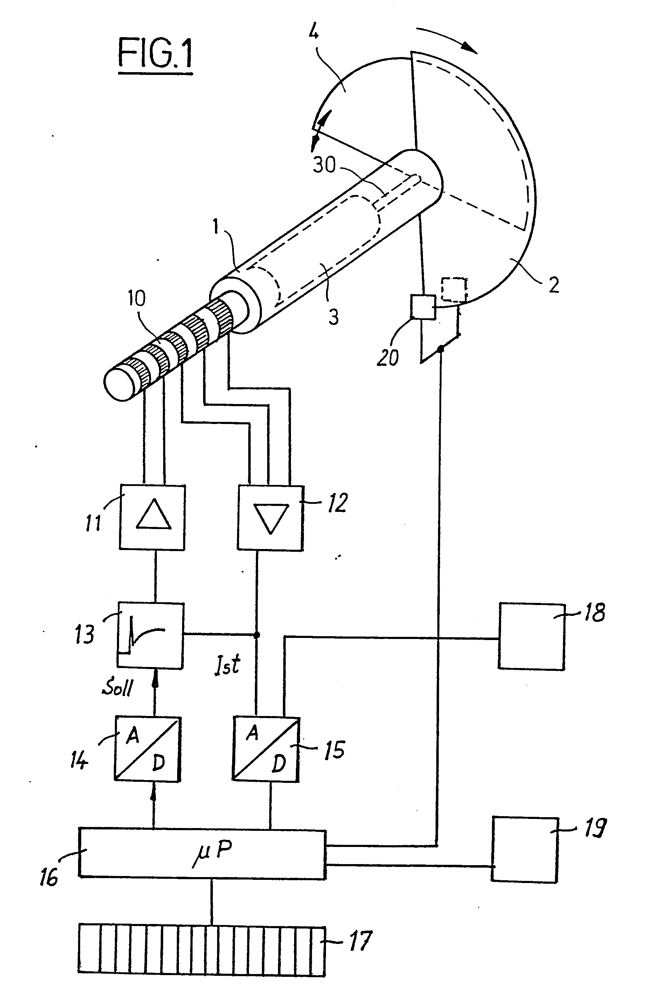

Figur 1 zeigt in schematisch-perspektivischer Darstellung die verstellbare Umlaufblende, die aus einem Blendensektor 2, der fest mit der Umlaufblendenwelle 1 verbunden ist, und einem verstellbaren Blendenverstellsektor 4 besteht, der über eine Verstellachse 30 mit einem mit der Umlaufblendenwelle 1 verbundenen Verstellmotor 3 gekoppelt ist. Die Umlaufblendenwelle 1 weist fünf Schleifringkontakte 10 auf, die zur Übertragung der Spannungsversorgung des Verstellmotors 3 sowie zur Übertragung eines die Stellung des Blendenverstellsektors 4 in Bezug auf den Blendensektor 2 wiedergebenden Meßwertes dienen.

Zur Verstellung der Blendenöffnung bzw. des Blendenverstellsektors der Umlaufblende der Laufbildkamera muß der Verstellmotor 3 eine Relativbewegung zwischen dem Blendensektor 2 und dem Blendenverstellsektor 4 bewirken. Dies wird dadurch erreicht, daß der Verstellmotor 3 über die Schleifringkontakte 10 mit einer entsprechenden, ihn antreibenden Spannung versorgt wird, deren Polarität die Richtung der Verstellung des Blendenverstellsektors auf eine größere oder kleinere Blendenöffnung vorgibt.

Zwei der fünf Schleifringkontakte sind mit dem Verstellmotor 3 sowie mit dem Ausgang eines ersten Verstärkers 11 verbunden, dessen Eingang über einen PID-Regler 13 und einen Digital/Analog-Wandler 14 an einen Mikroprozessor 16 angeschlossen ist.

Die drei verbleibenden Schleifringkontakte 10 sind einerseits mit einer Erfassungseinrichtung zur Erfassung des Blendenöffnungswinkels und andererseits mit dem Eingang eines zweiten Verstärkers 12 verbunden, dessen Ausgang sowohl mit einem Analog/Digital-Wandler 15 als auch mit dem PID-Regler 13 verbunden ist.

An den Analog/Digital-Wandler 15 ist ein analoges Bedienungsgerät 18 angeschlossen. Der Ausgang des Analog/Digital- Wandlers 15 ist mit einem Eingang des Mikroprozessors 16 verbunden, der über weitere Eingänge mit einer Programmiereinheit 19 sowie einer Lichtschranke 20 verbunden ist, die im Bereich der verstellbaren Umlaufblende 2, 4 angeordnet ist.

Ein weiterer Ausgang des Mikroprozessors 16 ist an eine Anzeigeeinrichtung 17 angeschlossen.

Zum Verstellen der Blendenöffnung der Laufbildkamera wird ein entsprechender Wert an dem analogen Bedienungsgerät 18 eingestellt oder über die Programmiereinheit 19 vorgegeben, die beispielsweise eine Änderung der Blendenöffnung in Abhängigkeit von der Transportgeschwindigkeit der Laufbildkamera in Form einer rampenförmigen Verstellkurve vorgibt.

Der vorgegebene Sollwert wird über den Digital/AnalogWandler 14 und den PID-Regler 13 sowie den ersten Verstärker 11 an die mit dem Verstellmotor 3 verbundenen Schleifringkontakte 10 abgegeben, so daß eine entsprechende Änderung der Spannungsversorgung des Verstellmotors 3 eine Relativbewegung des Blendenverstellsektors 4 gegenüber dem Blendensektor 2 bewirkt. Entsprechend dem jeweils eingestellten Wert führt der Verstellmotor 3 eine Relativbewegung zur rotierenden Umlaufblendenwelle 1 aus und bewegt dabei den Blendenverstellsektor 4 in Richtung auf einen größeren oder kleineren Sektor und damit in Richtung auf eine größere oder kleinere Blendenöffnung.

Eine mit dem Blendensektor 2 und dem Blendenverstellsektor 4 gekoppelte Erfassungseinrichtung gibt ein der jeweiligen Stellung des Blendenverstellsektors 4 in Bezug auf den Blendensektor 2 entsprechendes Signal über drei der fünf Schleifringkontakte 10 an den zweiten Verstärker 12 und über den Analog/Digital-Wandler 15 an einen Eingang des Mikroprozessors 16 ab, der zum einen die jeweilige Winkelstellung des Blendenverstellsektors 4 auf der Anzeigeeinrichtung 17 zur Anzeige bringt bzw. in Verbindung mit dem vom analogen Bedienungsgerät 18 bzw. der Programmiereinheit 19 abgegebenen Sollwert einen Soll/Istwert-Vergleich durchführt.

Die zusätzliche Anordnung einer Lichtschranke 20 im Bereich der verstellbaren Umlaufblende 2, 4 bewirkt eine Messung der Öffnungszeit der Umlaufblende 2, 4 während deren Lauf durch den Mikroprozessor 16 und einen zusätzlichen Soll/Istwert-Vergleich, so daß eine Feinkorrektur vorgenommen wird, was dazu führt, daß die Genauigkeit der Blendenverstellung unabhängig von eventuellen Systemtoleranzen sichergestellt wird.

Die Verstellung der Blendenöffnung der Laufbildkamera kann wahlweise manuell, automatisch in Verbindung bspw. mit einem Belichtungsmesser oder programmiert entsprechend einem vorgegebenen Ablaufprogramm erfolgen. Auf diese Weise ist es möglich, die Blendenöffnung den jeweiligen Lichtverhältnissen anzupassen, bestimmte gewünschte Effekte zu erzielen oder die Blendenöffnung und damit die Belichtungszeit des Laufbildfilmes der jeweiligen Filmgeschwindigkeit anzupassen.

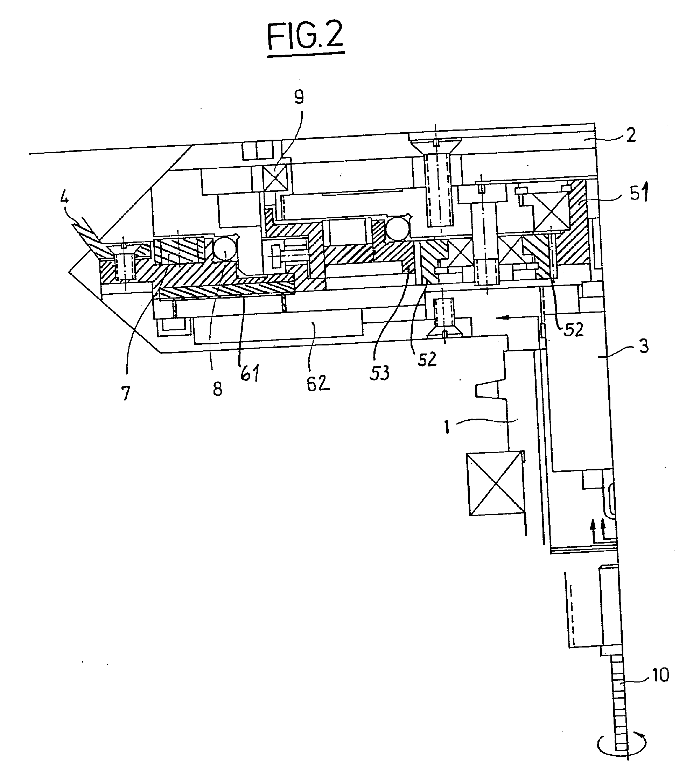

Figur 2 zeigt einen Querschnitt durch die verstellbare Umlaufblende sowie die Umlaufblendenwelle. Im vorliegenden Ausführungsbeispiel wird die Umlaufblendenwelle von dem Hauptmotor der Laufbildkamera in nicht näher dargestellter Weise angetrieben, sie kann jedoch wahlweise mit einem eigenen Antriebsmotor versehen werden, der elektronisch mit dem Hauptmotor der Laufbildkamera gekoppelt ist.

Die Umlaufblendenwelle 1 ist starr mit dem Blendensektor 2 gekoppelt, bei der es sich vorzugsweise um eine einteilige Spiegelblende handelt, die direkt auf dem Wellenflansch befestigt ist. Im Innern der Umlaufblendenwelle 1 ist ein Verstellmotor 3 angeordnet, der mechanisch mit einem Planetengetriebe 5 gekoppelt ist und dessen Stromversorgung über am Ende der Umlaufblendenwelle 1 angeordnete Schleifringkontakte 10 erfolgt.

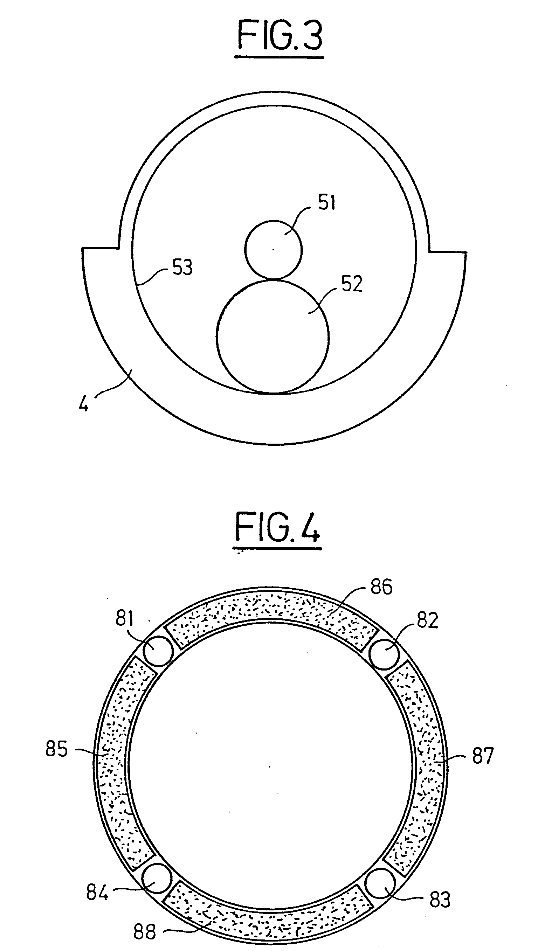

Wie der Schnitt durch das Planetengetriebe 5 gemäß Figur 3 verdeutlicht, ist die Verstellachse 30 des Verstellmotors 3 mit dem Sonnenrad 51 des Planetengetriebes 5 verbunden, dessen Planetenrad 52 feststehend angeordnet ist. Der Blendenverstellsektor 4 ist mit dem Hohlrad 53 des Planetengetriebes 5 verbunden und gegenüber dem Blendensektor 2 mittels einer nachstehend näher beschriebenen Lage- und Friktionseinrichtung 7, 8 gelagert.

Eine mit der Umlaufblendenwelle 1 fest verbundene Schleifbahn des Potentiometers 6 dient in Verbindung mit Schleifkontakten 61, die fest mit dem Blendenverstellsektor 4 verbunden sind, als Erfassungseinrichtung zur Lageerfassung des Blendenverstellsektors 4 in Bezug auf den Blendensektor 2. Je nach Stellung des Blendenverstellsektors 4 in Bezug auf den Blendensektor 2 verändert sich der Widerstandswert des Potentiometers 6, so daß über den Widerstandswert des Potentiometers 6 die jeweilige Stellung des Blendenverstellsektors 4 erfaßt werden kann.

Zu diesem Zweck ist das Potentiometer 6 über eine entsprechende Leitung mit den Schleifringkontakten 10 verbunden und gibt ein der Stellung des Blendenverstellsektors 4 entsprechendes Signal über die Schleifringkontakte 10 an den Mikroprozessor gemäß Figur 1 ab.

Eine manuelle Verstelleinrichtung 9 dient zur stromlosen Verstellung der verstellbaren Umlaufblende im Ruhezustand des Blendensektors 2 und enthält eine mit dem Blendensektor 2 gekoppelte Umlaufscheibe mit mehreren am Umfang vorgesehenen Nuten oder Kerben und einen mit dem Blendenverstellsektor 4 verbundenen Rasthebel oder einer Klinke zum formschlüssigen Eingriff in die Nuten oder Kerben der Umlaufscheibe. Auf diese Weise kann im Ruhezustand der verstellbaren Umlaufblende eine gewünschte Winkelstellung des Blendenverstellsektors eingestellt und mechanisch arretiert werden. Die manuelle Verstelleinrichtung dient im wesentlichen zur Aufrechterhaltung einer Blendenverstellung bei Stromausfall oder bei Ausfall des Verstellmotors.

Aufgrund der erfindungsgemäßen Erfassungseinrichtung ist der manuell eingestellte Wert der Blendenöffnung auf der Anzeigeeinrichtung 17 gemäß Figur 1 ablesbar, so daß sowohl im Stillstand als auch im Lauf eine Kontrolle des jeweils eingestellten Öffnungswinkels erfolgen kann.

Ein weiterer wesentlicher Vorteil der erfindungsgemäßen Erfassungseinrichtung besteht darin, daß ein manuell oder über den Verstellmotor 3 eingestellter Blendenöffnungswinkel vom Mikroprozessor 16 in einem Speicher gespeichert und durch Abruf des gespeicherten Wertes wieder eingestellt werden kann. Dadurch wird sichergestellt, daß ein eingestellter Wert des Blendenöffnungswinkels bspw. infolge einer Verstellung beim Putzen der Umlauf-Spiegelblende erneut eingestellt wird.

In gleicher Weise ist die Speicherung und der darauf folgende Abruf verschiedener Blendenöffnungswinkel unabhängig oder abhängig von der Transportgeschwindigkeit des Laufbildfilmes möglich.

Die Kopplung des Blendenverstellsektors 4 mit dem Blendensektor 2 erfolgt über eine Lage- und Friktionseinrichtung 7, 8, die so aufgebaut ist, daß im Normalbetrieb infolge der Friktion zwischen Blendenverstellsektor 4 und Blendensektor 2 kein ständiges Nachregeln des Verstellmotors 3 zur Aufrechterhaltung eines vorgegebenen Blendenöffnungswinkels erforderlich ist.

Dies wird gemäß Figur 4 durch eine Lagerung erzielt, die aus mehreren am Umfang des Lagers verteilt angeordneten Kugeln 81 bis 84 sowie dazwischen angeordneten Kunststoffsegmenten 85 bis 88 in Verbindung mit mehreren am Blendenverstellsektor 4 verteilt angeordneten Magneten 7 gemäß Figur 2 gewährleistet wird.

Bei dieser Art der Lagerung dienen die Kugeln 81 bis 84 des Lagers zur exakten radialen Führung des Blendenverstellsektors 4, während die zwischen den Kugeln 81 bis 84 vorgesehenen Kunststoffsegmente die axiale Führung des Blendenverstellsektors 4 gewährleisten und um das durch den Verstellmotor 3, das Getriebe usw. hervorgerufene Spiel auszugleichen und axiale Bewegungen des Blendenverstellsektors 4 zu verhindern.

In Verbindung mit den am Blendenverstellsektor 4 verteilt angeordneten Magneten 7 wird eine magnetische Haftkraft erzielt, die eine vorgegebene Friktion bewirkt, so daß im Normalbetrieb ein mittels des Verstellmotors 3 eingestellter Blendenöffnungswinkel ohne Nachregelung gehalten wird.

Eine Verstellung des Blendenverstellwinkels 4 gegenüber dem Blendensektor 2 muß somit unter Überwindung der Friktionskraft, die durch die Magnete 7 sowie die Kunststoffsegmente 85 bis 88 bewirkt wird, erfolgen.

Die vorstehend beschriebene verstellbare Umlaufblende ermöglicht somit einen funktionssicheren Betrieb zur automatischen, programmierten oder manuellen Verstellung eines Blendenverstellsektors gegenüber dem Blendensektor zur Veränderung des Blendenöffnungswinkels mit exakter Anzeige des jeweils eingestellten Blendenöffnungswinkels.

Durch Vorsehen einer manuellen Verstelleinrichtung wird sichergestellt, daß auch bei einem Ausfall des Verstellmotors bzw. der Stromversorgung ein jeweils gewünschter Blendenöffnungswinkel eingestellt werden kann.

Durch Vorsehen einer Friktionseinrichtung wird vermieden, daß zur Aufrechterhaltung eines vorgegebenen, bestimmten Blendenöffnungswinkels der Blendenverstellsektor ständig in seiner Lage gegenüber dem Blendensektor nachgeregelt werden muß, was einen erheblichen Stromverbrauch zur Ansteuerung des Verstellmotors zur Folge hätte. Gleichwohl wird eine äußerst exakte Lagerung des Blendenverstellsektors gegenüber dem Blendensektor durch entsprechende Anordnung von Kugeln der Lagereinrichtung gewährleistet.

## Patentansprüche

1. Verstellbare Umlaufblende für eine Filmkamera mit einem mit einer Umlaufblendenwelle (1) fest gekoppelten Blendensektor (2) und einem koaxial zu diesem angeordneten, in Drehrichtung verstellbaren Blendenverstellsektor (4), der über ein Getriebe mit einem mit der Umlaufblendenwelle (1) gekoppelten Verstellmotor (3) verbunden ist,
**dadurch gekennzeichnet,**
daß ein mit dem Blendenverstellsektor (4) einerseits und dem Blendensektor (2) andererseits verbundenes Potentiometer (6) vorgesehen ist, das die jeweilige Position des Blendenverstellsektors (4) gegenüber dem Blendensektor (2), somit den Blendenöffnungswinkel, erfaßt und ein entsprechendes Signal für eine Anzeigeeinrichtung (17) und für eine Regelung (13) abgibt.

2. Verstellbare Umlaufblende nach Anspruch 1, **dadurch gekennzeichnet,** daß die Schleifbahn (62) des Potentiometers (6) mit der Umlaufblendenwelle (1) und der Schleifkontakt (61) des Potentiometers (6) mit dem Blendenverstellsektor (4) verbunden ist.

3. Verstellbare Umlaufblende nach Anspruch 1 oder 2, **dadurch gekennzeichnet,** daß die Umlaufblendenwelle (1) Schleifringkontakte (10) zur Stromzufuhr für den Verstellmotor (3) und zur Abgabe des Potentiometer-Widerstandswertes aufweist.

4. Verstellbare Umlaufblende nach einem der vorangehenden Ansprüche, **dadurch gekennzeichnet,** daß das Getriebe aus einem Planetengetriebe (5) besteht, dessen Sonnenrad (51) mit der Achse des Verstellmotors (3) verbunden ist, dessen Planetenrad (52) bzw. Planetenräder feststehen und dessen Hohlrad (53) mit dem Blendenverstellsektor (4) gekoppelt ist.

5. Verstellbare Umlaufblende nach einem der vorangehenden Ansprüche, **dadurch gekennzeichnet,** daß eine Handverstelleinrichtung (9) zur stromlosen Verstellung des Blendenverstellsektors (4) vorgesehen ist, die eine mit dem Blendensektor (2) verbundene Umlaufscheibe mit mehreren am Umfang vorgesehenen Kerben und einen mit dem Blendenverstellsektor (4) verbundenen Rasthebel zur formschlüssigen Verbindung des Blendenverstellsektors (4) mit dem Blendensektor (2) aufweist.

6. Verstellbare Umlaufblende nach Anspruch 5, **dadurch gekennzeichnet,** daß die Kerben in vorgegebenen Winkelgraden am Umfang der Umlaufscheibe verteilt angeordnet sind.

7. Verstellbare Umlaufblende nach einem der vorangehenden Ansprüche, **dadurch gekennzeichnet,** daß zwischen dem Blendensektor (2) und dem Blendenverstellsektor (4) eine Lagerund Friktionseinrichtung (7, 8) vorgesehen ist, die aus mehreren radial zueinander beabstandeten Kugeln (81 bis 84) sowie mehreren in radialer Richtung zwischen den Kugeln (81 bis 84) angeordneten Kunststoffsegmenten (85 bis 88) mit mehreren auf dem Blendenverstellsektor (4) befestigten Magneten (7) besteht.

8. Verstellbare Umlaufblende nach einem der vorangehenden Ansprüche, **dadurch gekennzeichnet,** daß die Umlaufblendenwelle (1) über ein Getriebe mit dem Hauptmotor der Filmkamera verbunden ist.

9. Regeleinrichtung zum Betrieb einer verstellbaren Umlaufblende nach einem der vorangehenden Ansprüche, mit einer im Drehbereich der Blendensektoren (2, 4) angeordneten Sensoreinrichtung (20) zum Messen, einem Sollwertgeber (18, 19) zum Einstellen und einer Anzeigeeinrichtung (17) zum Anzeigen des Blendenöffnungswinkels, **dadurch gekennzeichnet,** daß ein Mikroprozessor (16) vorgesehen ist, der eingangsseitig mit der Sensoreinrichtung (20), dem Sollwertgeber (18, 19) und über einen ersten Verstärker (12) mit dem dem Blendenöffnungswinkel entsprechenden Signal des Potentiometers (6), und ausgangsseitig über einen zweiten Verstärker (11) mit dem Verstellmotor (3) verbunden ist, und daß der Mikroprozessor (16) geeignet ist, den jeweiligen Blendenöffnungswinkel entsprechend dem Potentiometersignal anzuzeigen und mit einem Sollwert zu vergleichen, um den Verstellmotor (3) zu steuern.

10. Regeleinrichtung nach Anspruch 9, **dadurch gekennzeichnet,** daß der Mikroprozessor (16) über einen Digital/Analog-Wandler (14) und einen PID-Regler (13) mit dem zweiten Verstärker (11) sowie über einen Analog/Digital-Wandler (15) mit einem analogen Bedienungsgerät (18) und mit dem Ausgang des ersten Verstärkers (12) verbunden ist, daß ein weiterer Eingang des Mikroprozessors (16) mit einer Programmiereinheit (19) verbunden ist, daß die Verbindung des Analog/Digital-Wandlers (15) mit dem Ausgang des zweiten Verstärkers (12) an den PID-Regler (13) angeschlossen ist und daß ein weiterer Ausgang des Mikroprozessors (16) mit der Anzeigeeinrichtung (17) verbunden ist.

## Claims

1. Adjustable revolving shutter for a film camera with a shutter sector (2) fixedly coupled to a revolving shutter shaft (1), and a shutter adjustment sector (4) mounted coaxially with the shutter sector, adjustable in the rotary direction and connected by gearing to an adjustment motor (3) coupled to the revolving shutter shaft (1),
characterised in that
a potentiometer (6) is provided which is connected to the shutter adjustment sector (4) on one side and to the shutter sector (2) on the other side and which detects the relevant position of the shutter adjustment sector (4) relative to the shutter sector (2), thus the shutter aperture angle, and releases a corresponding signal for an indicator device (17) and for a regulator (13).

2. Adjustable revolving shutter according to claim 1, characterised in that the slip path (62) of the potentiometer (6) is connected to the revolving shutter shaft (1) and the slip contact (61) of the potentiometer (6) is connected to the shutter adjustment sector (4).

3. Adjustable revolving shutter according to claim 1 or 2 characterised in that the revolving shutter shaft (1) has slip ring contacts (10) for the current supply for the adjustment motor (3) and for issuing the potentiometer resistance value.

4. Adjustable revolving shutter according to one of the preceding claims, characterised in that the gearing consists of a planetary gearing (5) whose sunwheel (51) is connected to the axis of the adjustment motor (3) whose planetary wheel (52) or wheels are fixed and whose hollow wheel (53) is coupled to the shutter adjustment sector (4).

5. Adjustable revolving shutter according to one of the preceding claims, characterised in that a manual adjustment device (9) is provided for adjusting the shutter adjustment sector (4) without current wherein this device has a revolving disc connected to the shutter sector (2) and provided with several notches round the circumference, and also has a detent lever connected to the shutter adjustment sector (4) for the positive keyed connection of the shutter adjustment sector (4) with the shutter sector (2).

6. Adjustable revolving shutter according to claim 5, characterised in that the notches are arranged spread out round the circumference of the revolving disc at predetermined angular degrees.

7. Adjustable revolving shutter according to one of the preceding claims characterised in that between the shutter sector (2) and the shutter adjustment sector (4) there is a bearing and friction device (7,8) which consists of several radially spaced out balls (81 to 84) as well as several plastics segments (85 to 88) arranged radially between the balls (81 to 84) with several magnets (7) fixed on the shutter adjustment sector (4).

8. Adjustable revolving shutter according to one of the preceding claims, characterised in that the revolving shutter shaft (1) is connected by gearing to the main motor of the film camera.

9. Regulator device for operating an adjustable revolving shutter according to one of the preceding claims, with a sensor unit (20) mounted in the rotary area of the shutter sectors (2,4) for measuring, an ideal value transmitter (18, 19) for adjusting, and an indicator unit (17) for indicating the shutter aperture angle, characterised in that a micro processor (16) is provided which is connected on the input side to the sensor unit (20), to the ideal value transmitter (18, 19) and by a first amplifier (12) to the signal of the potentiometer (6) corresponding to the shutter aperture angle, and on the output side by a second amplifier (11) to the adjustment motor (3), and that the micro processor (16) is suitable to indicate each shutter aperture angle corresponding to the potentiometer signal and to compare it with an ideal value in order to control the adjustment motor (3).

10. Regulator unit according to claim 9, characterised in that the micro processor (16) is connected by a digital/analog converter (14) and a PID regulator (13) to the second amplifier (11) as well as by an analog/digital converter (15) to an analog operating device (18) and to the output of the first amplifier (12), that a further input of the micro processor (16) is connected to a programming unit (19), that the connection of the analog/digital converter (15) with the output of the second amplifier (12) is attached to the PID regulator (13) and that a further output of the micro processor (16) is connected to the indicator device (17).

## Revendications

1. Obturateur rotatif ajustable pour caméra, comprenant un secteur (2) d'obturateur solidaire d'un arbre (1) d'obturateur rotatif et un secteur d'ajustement (4) d'obturateur installé coaxialement par rapport au secteur (2) de l'obturateur, ajustable dans sa position angulaire et relié par l'intermédiaire d'une transmission à un moteur d'ajustement (3) accouplé à l'arbre (1) de l'obturateur rotatif, caractérisé en ce qu'est prévu un potentiomètre (6) relié d'une part au secteur d'ajustement (4) de l'obturateur et d'autre part au secteur (2) de l'obturateur, qui détecte chaque position du secteur d'ajustement (4) de l'obturateur par rapport au secteur (2) de l'obturateur ainsi que l'angle d'ouverture de l'obturateur, et envoie un signal correspondant à un dispositif d'affichage (17) et à une régulation (13).

2. Obturateur rotatif ajustable selon la revendication 1, caractérisé en ce que la piste de friction (62) du potentiomètre (6) est reliée à l'arbre (1) de l'obturateur rotatif et en ce que le contact à friction (61) du potentiomètre (6) est relié au secteur d'ajustement (4) de l'obturateur.

3. Obturateur rotatif ajustable selon la revendication 1 ou 2, caractérisé en ce que l'arbre (1) de l'obturateur rotatif présente des anneaux (10) de contact à friction pour amener du courant au moteur d'ajustement (3) et pour transmettre la valeur de la résistance du potentiomètre.

4. Obturateur rotatif ajustable selon l'une des revendications précédentes, caractérisé en ce que la transmission est constituée d'une transmission à planétaire (5) dont la roue solaire (51) est reliée à l'axe du moteur d'ajustement (3) dont la roue planétaire (52) ou les roues planétaires sont arrêtée
et dont la roue creuse (53) est accouplée au secteur d'ajustement (4) de l'obturateur.

5. Obturateur rotatif ajustable selon l'une des revendications précédentes, caractérisé en ce qu'est prévu un dispositif de réglage manuel (9) destiné à ajuster sans consommation de courant le secteur d'ajustement (4) de l'obturateur, et qui présente un disque rotatif relié au secteur (2) de l'obturateur, avec plusieurs encoches prévues à sa périphérie, et un levier d'encliquetage relié au secteur d'ajustement (4) de l'obturateur pour assurer une liaison mécanique du secteur d'ajustement (4) de l'obturateur avec le secteur (2) de l'obturateur.

6. Obturateur rotatif ajustable selon la revendication 5, caractérisé en ce que les encoches sont disposées à intervalles en des positions angulaires prédéterminées à la périphérie du disque rotatif.

7. Obturateur rotatif ajustable selon l'une des revendications précédentes, caractérisé en ce qu'entre le secteur (2) de l'obturateur et le secteur ajustable (4) de l'obturateur est prévu un dispositif de palier à friction (7, 8) qui est constitué de plusieurs billes (81 à 84) disposées sur des rayons écartés les uns des autres, ainsi que de plusieurs segments en matière synthétique (85 à 88) disposés à la périphérie entre les billes (81 à 84) avec plusieurs aimants (7) fixés sur le secteur d'ajustement (4) de l'obturateur.

8. Obturateur rotatif ajustable selon l'une des revendications précédentes, caractérisé en ce que l'arbre (1) de l'obturateur réglable est relié par l'intermédiaire d'une transmission au moteur principal de la caméra.

9. Dispositif de régulation destiné à la commande d'un obturateur rotatif ajustable selon l'une des revendications précédentes, comprenant un dispositif (20) à détecteur de mesure disposé dans la zone de rotation des secteurs (2, 4) de l'obturateur, un générateur (18, 19) de valeurs de consigne de réglage et un dispositif d'affichage (17) servant à afficher l'angle d'ouverture de l'obturateur, caractérisé en ce qu'est prévu un microprocesseur (16) qui du coté de son entrée est relié au dispositif (20) à détecteur, au générateur de valeurs de consigne (18, 19) et par l'intermédiaire d'un premier amplificateur (12) au signal du potentiomètre (6) correspondant à l'angle d'ouverture de l'obturateur, et du côté de sa sortie, par l'intermédiaire d'un second amplificateur (11), à un moteur d'ajustement (3), et en ce que le microprocesseur (16) est capable d'afficher en fonction du signal du potentiomètre l'angle d'ouverture effective de l'obturateur et de le comparer à une valeur de consigne pour commander le moteur d'ajustement (3).

10. Dispositif de régulation selon la revendication 9, caractérisé en ce que le microprocesseur (16) est relié par l'intermédiaire d'un convertisseur numérique-analogique (14) et d'un régulateur PID (13) au second amplificateur (11), ainsi que par l'intermédiaire d'un convertisseur analogique-numérique (15) à un dispositif analogique de commande (18) et à la sortie du premier amplificateur (12), en ce qu'une autre entrée du microprocesseur (16) est reliée à une unité de programmation (19), en ce que la liaison entre le convertisseur analogique-numérique (15) et la sortie du second amplificateur (12) est raccordée au régulateur PID (13), et en ce qu'une autre sortie du microprocesseur (16) est reliée au dispositif d'affichage (17).
